# FASCICULE DE BREVET EUROPEEN

(11) **EP 1 515 051 B1**
(45) Date de publication et mention de la délivrance du brevet: **08.03.2006**
(21) Numéro de dépôt: 04291885.4
(22) Date de dépôt: 23.07.2004
(51) Int. Cl.: F15B 15/08

(54) **Actionneur a deux modes de fonctionnement**
Stellantrieb mit zwei Betriebsarten
Actuator with two operating modes

(30) Priorité: 12.09.2003 FR 0310736
(43) Date de publication de la demande: 16.03.2005
(73) Titulaire: MESSIER BUGATTI, 78140 Velizy Villacoublay (FR)
(72) Inventeur: Quenerch'du, Marc, 75020 Paris (FR)
(74) Mandataire: Jaunez, Xavier

(56) Documents cités:
- DE-A- 3 910 814
- GB-A- 733 840
- US-A- 2 730 994
- US-A- 3 029 659

## Description

L'invention concerne un actionneur à deux modes de fonctionnement, à savoir un mode hydraulique et un mode mécanique.

### ARRIERE-PLAN DE L'INVENTION

On connaît des actionneurs hydrauliques qui comportent un corps avec une cavité cylindrique et une tige s'étendant au travers d'une extrémité de la cavité en étant solidaire d'un piston monté à coulissement dans la cavité de façon à délimiter dans celle-ci deux chambres hydrauliques. L'amenée de fluide sous pression dans l'une ou l'autre des chambres provoque la sortie ou la rentrée de la tige.

Ce type d'actionneur est parfois employé dans des applications où la sortie de la tige doit pouvoir être assurée dans tous les situations, même en cas de panne hydraulique.

Dans cette situation, la sortie de la tige peut être assurée de diverses façons. On peut tout d'abord ouvrir les deux chambres et laisser travailler le poids de la charge attelée à la tige. C'est de cette façon qu'est par exemple assurée la sortie secours des atterrisseurs d'un aéronef.

Ceci n'est néanmoins possible que si la charge ne présente, pas de position d'équilibre stable sous l'effet de la gravité correspondant à une position intermédiaire de la tige. Dans ce cas, la gravité seule ne peut amener la charge dans une position finale correspondant à la position sortie de la tige.

Il est alors nécessaire de prévoir des moyens additionnels aptes à assurer la sortie de la tige. Ces moyens peuvent par exemple être de type mécanique, comme un ressort de sortie de tige. Le ressort doit être prévu assez puissant pour permettre la sortie de la tige à l'encontre des efforts résistants s'opposant à ladite sortie. Le ressort a pour inconvénient d'exercer en permanence sur la tige un effort tendant à la sortie de celle-ci, contre lequel il est nécessaire de lutter en fonctionnement hydraulique normal pour provoquer la rentrée de la tige.

Les moyens additionnels de sortie de la tige peuvent encore être du type électrohydraulique, comme une électropompe agencée pour injecter du fluide sous pression dans la chambre adéquate de l'actionneur pour provoquer la sortie de la tige. Néanmoins, cette solution souffre d'être complexe et onéreuse.

L'état de la technique est illustré par les documents GB-A-733 840, US-A-3 029 659 et US-A-2 730 994, qui décrivent des actionneurs hydrauliques à mode secours électrique. Ces actionneurs comportent une vis et un écrou, dont l'un est solidaire de la tige tandis que l'autre est entraîné en rotation par un moteur électrique. Il convient cependant de noter que l'élément entraîné en rotation est axialement immobile, ce qui impose une liaison réversible entre l'écrou et la vis pour permettre le mouvement de la tige en mode hydraulique.

Pour compléter l'arrière-plan technologique, on peut également citer le document DE-A-39 10814 qui décrit la structure générale d'un actionneur télescopique fonctionnant exclusivement en mode électrique.

### OBJET DE L'INVENTION

L'invention a pour objet un actionneur ne présentant pas les inconvénients précités.

### BREVE DESCRIPTION DE L'INVENTION

On propose un actionneur comportant un corps avec une cavité cylindrique délimitée axialement par deux extrémités et une tige s'étendant au travers d'une des extrémités de la cavité en étant solidaire d'un piston monté à coulissement axial dans la cavité de façon à délimiter dans celle-ci deux chambres hydrauliques, l'actionneur étant équipé de moyens additionnels de sortie de la tige qui comportent selon l'invention :
- un moyen d'antirotation de la tige par rapport au corps de l'actionneur ;
- un écrou rigidement solidaire de la tige ;
- une vis qui s'étend axialement dans la cavité et qui coopère avec l'écrou ;
- un arbre d'entraînement qui s'étend axialement dans la cavité en pouvant tourner, le long duquel la vis est montée à coulissement sans rotation ; et
- un moyen d'entraînement en rotation de l'arbre d'entraînement.

Ainsi, lors du fonctionnement en mode hydraulique l'écrou coulisse avec la tige et entraîne la vis qui coulisse sur l'arbre d'entraînement. Le fonctionnement hydraulique n'est donc pas gêné par la présence du moyen de sortie secours.

Lors du fonctionnement en mode mécanique, lorsque l'alimentation en fluide sous pression est défaillante, ou n'est pas disponible, les chambres hydrauliques sont mises toutes deux au retour, tandis que l'arbre d'entraînement est mis en rotation. La vis est ainsi entraînée en rotation. Si la vis n'est pas en appui contre l'extrémité de la cavité opposée à l'extrémité traversée par la tige, la rotation provoque son déplacement axial par appui contre l'écrou maintenu axialement immobile en raison de frottements internes, ou de l'inertie des charges attelées à l'actionneur. Ce déplacement se poursuit jusqu'à la butée de la vis contre l'extrémité opposée à l'extrémité traversée par la vis. Une fois la vis arrivée en butée, la rotation de la vis provoque le déplacement axial de l'écrou dans une direction opposée correspondant à la sortie de la tige.

On obtient ainsi deux modes de fonctionnement de l'actionneur, l'un hydraulique, l'autre mécanique, pouvant être mis en oeuvre de façon alternative au gré des disponibilités de sources d'énergie hydraulique ou mécanique.

De préférence, l'arbre d'entraînement s'étend au travers d'une extrémité de la cavité opposée à l'extrémité traversée par la tige pour coopérer avec le moyen d'entraînement en rotation monté à l'extérieur de la cavité.

Ainsi, le moyen d'entraînement est à l'abri du fluide hydraulique qui remplit la cavité.

Selon un mode préféré de réalisation de l'invention, le moyen d'entraînement en rotation est un moteur électrique solidaire de l'actionneur.

Selon un mode particulier de réalisation de l'invention, le piston est venu de matière avec la tige, l'écrou étant rapporté dans un logement de la tige.

De préférence, l'actionneur comporte une butée axiale de la vis contre une extrémité de la cavité opposée à l'extrémité traversée par la tige.

Avantageusement, la tige est creuse et la vis s'étend dans la tige. Avantageusement encore, la vis elle-même est creuse, et l'arbre d'entraînement s'étend dans la vis en étant liée à celle-ci par des cannelures.

### BREVE DESCRIPTION DES DESSINS

L'invention sera mieux comprise à la lumière de la description qui suit en référence aux figures des dessins annexés parmi lesquelles :
- la figure 1 est une vue en coupe d'un actionneur selon l'invention sur lequel la tige est représentée en position rentrée ;
- la figure 2 est une vue analogue à la figure 1, sur laquelle la tige est représentée dans une position intermédiaire lors d'un fonctionnement en mode hydraulique (ici mode normal);
- la figure 3 est une vue analogue à la figure 1 ; sur laquelle l'actionneur est représenté en fonctionnement en mode mécanique (ici mode secours) .

### DESCRIPTION DETAILLEE DE L'INVENTION

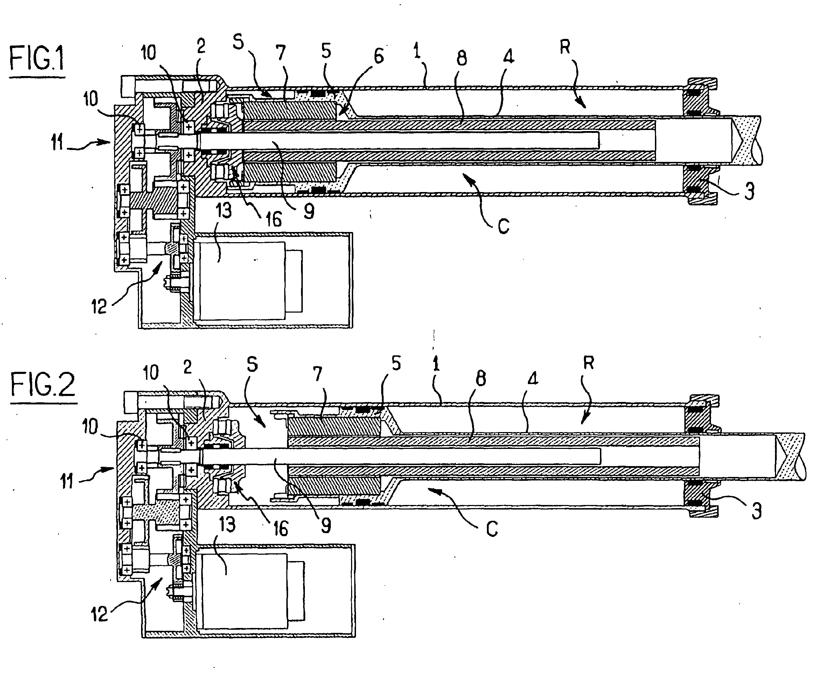

En référence à la figure 1, l'actionneur selon l'invention comprend un corps comportant une chemise 1 borgne dont l'intérieur forme une cavité C cylindrique fermée à étanchéité par un fond 2 et par un bouchon 3. L'actionneur comporte une tige 4 creuse qui s'étend axialement dans la cavité C pour traverser à étanchéité le bouchon 3 formant palier. La tige 4 est terminée dans la cavité C par une extrémité formant piston 5 qui délimite dans la cavité C une chambre de sortie S et une chambre de rentrée R.

La tige 4 comporte un logement 6 pour un écrou 7 qui est monté bloqué dans ledit logement 6, de sorte que la tige 4 et l'écrou 7 sont rigidement solidaires. Une vis 8 creuse s'étend axialement dans la tige 4 pour coopérer-avec l'écrou 7 au moyen d'une liaison de type hélicoïdal. Un arbre d'entraînement 9 s'étend axialement dans la vis 8 et traverse à étanchéité le fond 2 pour déboucher dans un carter 11 dans lequel l'arbre d'entraînement 9 est supporté par deux roulements 10 permettant une rotation de l'arbre d'entraînement 9. Le carter 11 définit un logement pour un réducteur 12, comportant ici deux arbres intermédiaires, qui relie en rotation l'arbre d'entraînement 9 à un moteur électrique 13 solidaire du carter 11. La vis 8 est montée sur l'arbre d'entraînement 9 pour coulisser sans rotation le long de celui-ci, au moyen ici d'une liaison par cannelures (non visibles). Une rotation de l'arbre d'entraînement 9 provoque donc une rotation de la vis 8.

Un moyen d'antirotation (non représenté) empêche la rotation de la tige 4 par rapport à la chemise 1. Ce moyen d'antirotation peut être interne à l'actionneur, mais il peut également être externe à l'actionneur, comme dans la situation où la tige et le corps de l'actionneur sont attelés à des charges au moyen de liaisons cinématiques empêchant une rotation relative de la tige vis à vis du corps.

Le fonctionnement de l'actionneur selon l'invention est le suivant. En fonctionnement hydraulique, des ports hydrauliques non représentés permettent l'amenée de fluide sous pression dans l'une des chambres S,R, tandis que l'autre des chambres S,R est connectée au retour hydraulique pour permettre l'évacuation du fluide hydraulique contenu dans ladite chambre.

Comme cela est visible à la figure 2 illustrant l'actionneur lors du fonctionnement en mode hydraulique, le déplacement axial de la tige 4 sous l'effet du fluide sous pression provoque un déplacement correspondant de la vis 8 entraînée par l'écrou 7, la vis 8 coulissant librement sur l'arbre d'entraînement 9 qui ne tourne pas.

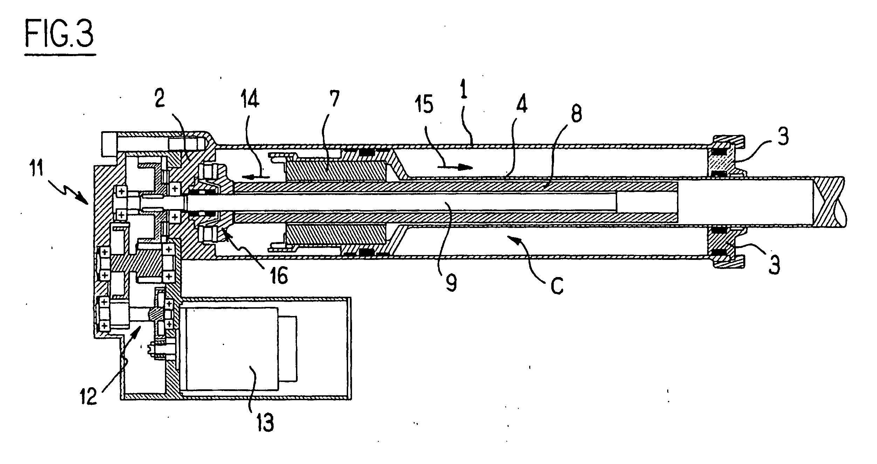

Lors du fonctionnement en mode mécanique, les ports des chambres S,R sont connectés au retour hydraulique, tandis que le moteur électrique 13 est commandé pour provoquer une rotation de l'arbre d'entraînement 9. Partant d'une position intermédiaire telle que celle illustrée à la figure 2,, cette rotation provoque tout d'abord un déplacement axial de la vis 8 dans la direction 14 illustrée à la figure 3. En effet, les frottements subis par la tige 4, ou encore l'inertie des charges exercées sur l'actionneur auquel est attelé la tige maintiennent la tige 4 immobile, forçant ainsi la vis 8 à se déplacer axialement en prenant appui sur l'écrou 7. Le moteur 13 est bien entendu commandé pour tourner dans le sens qui provoque le déplacement de la vis 8 dans la direction 14.

Puis, lorsque la vis 8 est parvenue en butée contre le fond 2, comme cela est illustré à la figure 3, la rotation de la vis 8 provoque un déplacement de l'écrou 7 et donc de la tige 4 dans la direction 15 correspondant à la sortie de la tige 4, à l'encontre des efforts résistants s'exerçant sur la tige 4. Ces efforts sont transmis au fond 2 par appui de la vis 8 contre celui-ci. Avantageusement, le fond 2 est équipé d'une butée axiale 16 pour permettre une rotation aisée de la vis 8 sous l'effort d'appui.

La sortie de la tige 4 peut donc être obtenue de façon hydraulique ou mécanique.

L'invention n'est pas limitée aux modalités particulières de l'invention qui viennent d'être décrites, mais bien au contraire englobe toute variante entrant dans le cadre de l'invention tel que défini par les revendications.

En particulier, bien que l'on ait indiqué que le moyen d'entraînement en rotation de l'arbre d'entraînement 9 est un moteur électrique, on pourra également prévoir un moteur hydraulique, ou encore une manivelle de secours.

Bien que l'on ait indiqué que le moyen d'entraînement en rotation de l'arbre d'entraînement 9 soit monté à demeure sur l'actionneur, il pourra être prévu indépendant de l'actionneur.

Bien que ,l'on ait indiqué que le moyen d'entraînement en rotation de l'arbre d'entraînement 9 est monté à l'extérieur de la cavité, on pourra prévoir un montage dans la cavité. Le moyen d'entraînement en rotation 9 est alors baigné par le fluide hydraulique.

Bien que l'on ait indiqué que l'arbre d'entraînement 9 était attelé au moteur électrique 13 via un réducteur 12, l'arbre d'entraînement pourra être en prise directe avec le moteur.

Bien que l'on ait indiqué que la tige 4 est creuse, l'invention est également applicable à un actionneur avec une tige pleine. La course en fonctionnement en mode secours est alors limitée à la longueur de l'écrou.

Bien que l'on ait indiqué que la vis est creuse pour recevoir l'arbre d'entraînement, ce qui permet une course maximale de la tige 4, l'invention est encore applicable à un actionneur avec une vis pleine. Une partie de liaison entre l'arbre d'entraînement 9 et la vis 8 est alors prévue en extrémité de la vis, limitant d'autant la course de la tige 4.

Bien que l'on ait indiqué que la vis 8 était montée à coulissement sans rotation sur l'arbre d'entraînement 9 au moyen de cannelures, on pourra prévoir plus généralement tout autre type de liaison glissière, comme un doigt ou une clavette solidaire de l'un de ces deux éléments et s'étendant dans une rainure longitudinale de l'autre élément.

Bien que l'on ait indiqué que la tige 4 est venue de matière avec le piston 5, on pourra prévoir un piston rapporté sur la tige.

## Revendications

1. Actionneur comportant un corps (1,2,3) ayant une cavité cylindrique, et une tige (4) s'étendant au travers d'une extrémité (3) de la cavité en étant solidaire d'un piston (5) monté à coulissement axial dans la cavité de façon à délimiter dans celle-ci deux chambres hydrauliques (S,R), l'actionneur comportant des moyens additionnels de sortie de la tige, **caractérisé en ce que** lesdits moyens additionnels comportent :
• un moyen d'antirotation de la tige (4) par rapport au corps (1,2,3) de l'actionneur ;
• un écrou (7) rigidement solidaire de la tige (4) ;
• une vis (8) s'étendant axialement dans la cavité et coopérant avec l'écrou (7) ;
• un arbre d'entraînement (9) qui s'étend axialement dans la cavité en pouvant tourner, le long duquel la vis (8) est montée à coulissement sans rotation ; et
• un moyen d'entraînement en rotation (13) de l'arbre d'entraînement (9).

2. Actionneur selon la revendication 1, **caractérisé en ce que** l'arbre d'entraînement (9) s'étend au travers d'une extrémité (2) de la cavité opposée à l'extrémité (3) traversée par la tige (4) pour être entraîné en rotation par le moyen d'entraînement en rotation (13) monté à l'extérieur de la cavité.

3. Actionneur selon la revendication 2, **caractérisé en ce que** le moyen d'entraînement en rotation est un moteur électrique (13) solidaire de l'actionneur.

4. Actionneur selon l'une des revendications précédentes, **caractérisé en ce que** le piston (5) est venu de matière avec la tige (4), l' écrou (7) étant rapporté dans un logement de la tige (4).

5. Actionneur selon l'une des revendications précédentes, **caractérisé en ce que** l'actionneur comporte une butée axiale (16) de la vis (8) contre une extrémité (2) de la cavité opposée à l'extrémité (3) traversée par la tige (4).

6. Actionneur selon l'une des revendications précédentes, **caractérisé en ce que** la tige (4) est creuse et **en ce que** la vis (8) s'étend dans la tige (4).

7. Actionneur selon l'une des revendications précédentes, **caractérisé en ce que** la vis (8) est creuse, et **en ce que** l'arbre d'entraînement (9) s'étend dans la vis (8) en étant liée à celle-ci par des cannelures.

## Patentansprüche

1. Aktuator, umfassend einen Körper (1, 2, 3) mit einem zylindrischen Hohlraum und eine Stange (4), die durch ein Ende (3) des Hohlraums verläuft und fest mit einem Kolben (5) ausgebildet ist, der axial verschiebbar so in dem Hohlraum montiert ist, dass er darin zwei hydraulische Kammern (S, R) begrenzt, wobei der Aktuator zusätzliche Mittel für den Austritt der Stange umfasst, **gekennzeichnet dadurch, dass** die zusätzlichen Mittel umfassen:
- ein Mittel, das dem Drehen der Stange (4) relativ zum Körper (1, 2, 3) des Aktuators entgegen wirkt;
- eine Mutter (7), die mit der Stange (4) fest verbunden ist;
- eine Schraube (8), die in dem Hohlraum axial verläuft und mit der Mutter (7) zusammen wirkt;
- eine Antriebswelle (9), die in dem Hohlraum axial und drehbar verläuft und entlang der die Schraube (8) ohne Drehung verschiebbar angeordnet ist; und
- einen Drehantrieb (13) zum Drehen der Antriebswelle (9).

2. Aktuator nach Anspruch 1, **dadurch gekennzeichnet, dass** die Antriebswelle (9) durch ein Ende (2) des Hohlraums verläuft, das entgegengesetzt zu dem Ende ist, das von der Stange (4) durchsetzt ist, sodass sie durch den außerhalb des Hohlraums angeordneten Drehantrieb (13) zur Drehung treibbar ist.

3. Aktuator nach Anspruch 2, **dadurch gekennzeichnet, dass** der Drehantrieb ein Motor (13) ist, der mit dem Aktuator fest verbunden ist.

4. Aktuator nach einem der vorhergehenden Ansprüche, **dadurch gekennzeichnet, dass** der Kolben (5) einstückig mit der Stange (4) ist, wobei die Mutter (7) in einer Aufnahme der Stange (4) angeordnet ist.

5. Aktuator nach einem der vorhergehenden Ansprüche, **dadurch gekennzeichnet, dass** der Aktuator einen axialen Anschlag (16) für die Schraube (8) an dem Ende (2) umfasst, das entgegengesetzt zu dem von der Stange (4) durchsetzten Ende (3) ist.

6. Aktuator nach einem der vorhergehenden Ansprüche, **dadurch gekennzeichnet, dass** die Stange (4) hohl ist, und dass die Schraube (8) in der Stange (4) verläuft.

7. Aktuator nach einem der vorhergehenden Ansprüche, **dadurch gekennzeichnet, dass** die Schraube (8) hohl ist und dass die Antriebswelle (9) in der Schraube verläuft und mit dieser durch Keilnuten verbunden ist.

## Claims

1. An actuator comprising a body (1, 2, 3) with a cylindrical cavity, and a rod (4) extending through one end (3) of the cavity, being secured with a piston (5) mounted to slide axially in the cavity so as to define therein two hydraulic chambers (S, R), the actuator including additional means for extending the rod, and being **characterized in that** said additional means comprise:
· means for preventing the rod (4) from rotating relative to the body (1, 2, 3) of the actuator;
· a nut (7) rigidly secured to the rod (4);
· a screw (8) extending axially inside the cavity and co-operating with the nut (7);
· a drive shaft (9) extending axially inside the cavity and being free to turn, the screw (8) being mounted to slide without rotation along the shaft; and
· rotary drive means (13) for driving the drive shaft (9).

2. An actuator according to claim 1, **characterized in that** the drive shaft (9) extends through an end (2) of the cavity opposite from the end (3) through which the rod (4) passes, in order to be driven in rotation by the rotary drive means (13) mounted outside the cavity.

3. An actuator according to claim 2, **characterized in that** the rotary drive means are constituted by an electric motor (13) secured to the actuator.

4. An actuator according to any preceding claim, **characterized in that** the piston (5) is formed integrally with the rod (4), the nut (7) being fitted in a housing of the rod (4).

5. An actuator according to any preceding claim, **characterized in that** the actuator includes an axial abutment (16) for the screw (8) against an end (2) of the cavity opposite from the end (3) through which the rod (4) passes.

6. An actuator according to any preceding claim, **characterized in that** the rod (4) is hollow, and **in that** the screw (8) extends in the rod (4),

7. An actuator according to any preceding claim, **characterized in that** the screw (8) is hollow, and **in that** the drive shaft (9) extends inside the screw (8), being connected thereto by fluting.
